# EUROPEAN PATENT APPLICATION

(11) **EP 1 767 408 A2**
(43) Date of publication of application: **28.03.2007**
(21) Application number: 06019501.3
(22) Date of filing: 18.09.2006
(51) Int. Cl.: B60R 21/015, B60R 22/48, G01L 5/06

(54) **Belt tension detecting apparatus and child seat**

(30) Priority: 26.09.2005 JP 2005278173; 22.02.2006 JP 2006045475
(71) Applicant: TAKATA CORPORATION, Minato-ku, Tokyo 106-8510 (JP)
(72) Inventor: Nakagawa, Osamu Takata Corporation, Tokyo 106-8510 (JP); Sakumoto, Masayuki Takata Corporation, Tokyo 106-8510 (JP); Kaneko, Hideki Takata Corporation, Tokyo 106-8510 (JP); Kanbayashi, Hirokazu Takata Corporation, Tokyo 106-8510 (JP)
(74) Representative: Banzer, Hans-Jörg

(57) **Abstract**

In order to provide a belt tension detecting apparatus (1) that can facilitate a mounting work to a belt (B), and a child seat (60) provided with this belt tension detecting apparatus (1), a tension indicator (1) includes a roller (10) arranged on a belt (B) at a midsection in the direction of extension thereof, a case (20) accommodating the roller (10) so as to be capable of rotating in the belt retracting direction and in the belt withdrawing direction, a spring (30) which urges the roller (10) in the belt retracting direction and, when a tension equal to or larger than a predetermined value is applied to the belt (B), allows the rotation of the roller (10) in the belt withdrawing direction, and a different color portion (40) and a window (24) which indicate the fact that the roller (10) rotates in the belt withdrawing direction. The roller (10) is provided with a slit (12) penetrating through the roller (10) in the direction orthogonal to an axial centerline and is led through the slit (12).

## Description

### [Technical Field]

The present invention relates to a belt tension detecting apparatus for detecting the fact that a tension of a predetermined value or larger is applied to a belt and a child seat of a type which is joined and fixed to a vehicle with the belt.

### [Background Art]

It is publicly known that a child seat is installed on a seat of a vehicle and the child seat is fixed by extending a belt between the child seat and a vehicle member (for example, see U.S. patent application No.US2005/0006934A1).

In this U.S. patent application No.US2005/0006934A1, a technology to provide a belt tension detecting apparatus for detecting the fact that a tension of a predetermined value or larger is applied to the belt is described.

In the same publication, the belt includes a first strap on a half side (for example, on the side of the child seat) in the extending direction, and a second strap on the other half side (for example, on the side of the vehicle member), and the belt tension detecting apparatus is provided so as to connect these straps.

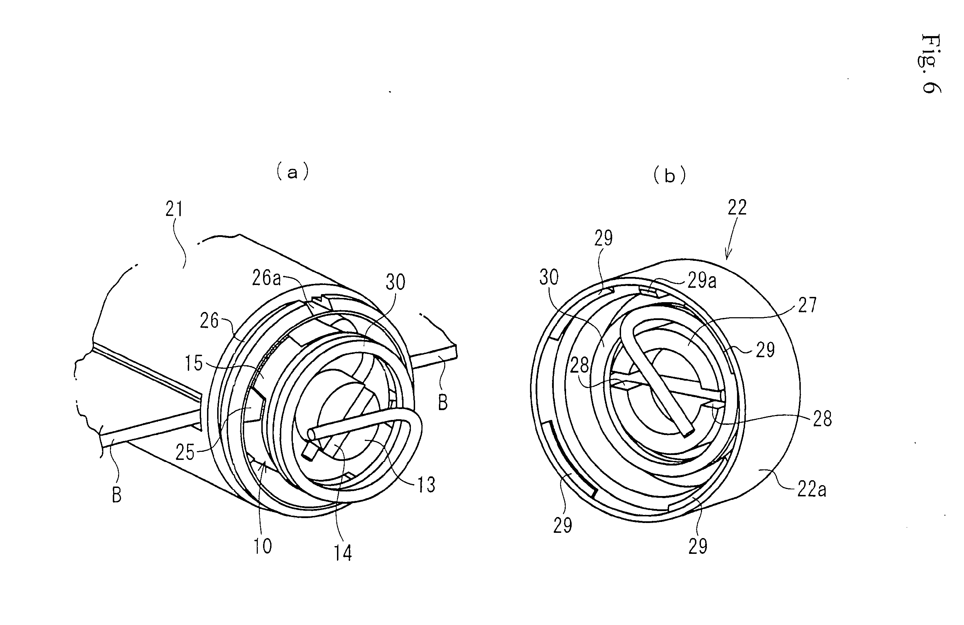

In a mode shown in Fig. 5 in the same publication, the belt tension detecting apparatus includes a roller for retracting a distal side of the first strap, a housing for storing the roller, a spring which urges the roller in the direction of retracting the strap and, when a tension of a predetermined value or larger is applied to the strap, allows rotation of the roller in the strap withdrawing direction, and a display section for displaying whether or not the roller is in a state of being rotated in the strap retracting direction. The second strap is joined to the housing.

The display section is provided along an outer peripheral surface of the roller, and the housing is provided with a window for viewing the display section. A portion of the display section which is exposed from the window in a state in which the strap is retracted by the roller is colored into red. A portion which is exposed from the window when the roller rotates in the strap withdrawing direction is colored into green.

In this belt tension detecting apparatus, when the tension is not applied to the strap, or when the tension applied to the strap is smaller than the predetermined value, the roller assumes the strap retracted state, and red color is displayed in the window. When the tension of the strap reaches or exceeds the predetermined value, the roller rotates in the strap withdrawing direction against an urging force of the spring, and the display in the window changes from red to green. Accordingly, the fact that the tension equal to or larger than the predetermined value is applied to the strap is recognized.

### [Problems to be Solved by the Invention]

In the belt tension detecting apparatus in the U.S. Patent Application No.US2005/0006934A1, the belt is separated into the first strap and the second strap, and the first strap is connected to the roller and the second strap is connected to the housing. Therefore, a mounting work of the tension detecting apparatus to the belt is troublesome.

It is an object of the present invention to provide a belt tension detecting apparatus which can be mounted to the belt easily and a child seat provided with this belt tension detecting apparatus.

### [Means for Solving the Problems]

According to the invention, this object is achieved by a belt tension detecting apparatus as defined in claim 1 and a child seat as defined in claim 7. The dependent claims define preferred and advantageous embodiments of the invention.

A belt tension detecting apparatus according to a first aspect of the invention is a belt tension detecting apparatus for detecting the fact that a tension equal to or larger than a predetermined value is applied to a belt, including a rotating body being arranged on the belt at a midsection in the direction of extension of the belt and being capable of rotating in a normal direction by being pressed by the belt in association with increase in the tension of the belt; urging means that urges the rotating body in the normal direction and in an opposite direction; and display means that displays the fact that the rotating body rotates in the normal direction at a predetermined angle or more.

The belt tension detecting apparatus according to a preferred embodiment is characterized in that a slit is formed through the rotating body for allowing passage of the belt, the slit is provided so that a width direction of the belt is oriented in the direction of an axial centerline of the rotating body or in parallel thereto, and the urging means urges the rotating body in the direction of retraction of the belt passed through the slit.

The belt tension detecting apparatus according to another preferred embodiment is characterized in that the rotating body includes a belt guide surface extending in the direction away from an axis of rotation thereof and at least a part of the belt guide surface apart from the axis of rotation comes into abutment with the belt.

The belt tension detecting apparatus according to still another preferred embodiment includes a case that rotatably accommodates the rotating body, belt insertion holes respectively formed on a pair of opposing surfaces of the case, the pair of opposing surfaces opposing to each other in the direction intersecting with the axis of rotation of the rotating body, and is characterized in that one end side of the belt is led through one of the belt insertion holes out from the case and the other end side is led through the other belt insertion hole out from the case.

The belt tension detecting apparatus according to a preferred embodiment is characterized in that the display means includes a window provided on the case and a different color portion provided on a part of a peripheral surface of the rotating body, and the different color portion faces the window when the rotating body rotates by a predetermined angle or more.

A child seat according to a second aspect of the invention is a child seat installed on a seat of a vehicle and joined and fixed to a member on the vehicle side by a belt including a belt tension detecting apparatus for detecting the fact that a tension equal to or larger than a predetermined value is applied to the belt, characterized in that the belt tension detecting apparatus is the belt tension detecting apparatus according to the first aspect or any one of the embodiments described above.

### [Advantages]

In the belt tension detecting apparatus according to the present invention, the rotating body is arranged on the belt at the midsection in the direction of extension thereof, and one end side and the other end side of the belt with the intermediary of the rotating body are continued integrally.

When the tension applied to the belt is smaller than the predetermined value, the force of the belt pressing the rotating body is weak, so that the rotating body does not rotate in the normal direction or the angle of rotation thereof is smaller than the predetermined value.

When the tension applied to the belt reaches or exceeds the predetermined value, the rotating body is pressed by the belt and rotates by at least the predetermined angle in the normal direction. Then, the fact that the rotating body is rotated by the predetermined angle or more is displayed on the display means. Accordingly, the fact that the tension equal to or larger than the predetermined value is applied to the belt is detected.

According to the belt tension detecting apparatus in the present invention, it is not necessary to join the end of the belt to the rotating body, and hence configuration of the belt tension detecting apparatus can be relatively simplified. The tension detecting apparatus can be mounted to the belt simply by arranging the rotating body so as to come into contact with the belt, and hence the mounting work of the tension detecting apparatus to the belt is also simplified.

In the belt tension detecting apparatus disclosed in the above-described U.S. Patent Application No. US2005/0006934A1, it is necessary to adjust the length of the first strap and the second strap on both sides of the tension detecting apparatus respectively when moving the tension detecting apparatus in the direction of extension of the belt (increase the length of one of them and shorten the other one). However, in the belt tension detecting apparatus of the present invention, since the rotating body is only in contact with the belt, it is achieved simply by sliding the rotating body along the belt. Accordingly, adjustment of the mounting position of the tension detecting apparatus in the direction of extension of the belt can be achieved easily and quickly.

In the mode of a preferred embodiment, the belt is led through the slit which penetrates the rotating body, and the one end side and the other end side of the belt with the intermediary of the rotating body are continued integrally.

In this mode, the rotating body is urged in the belt retracting direction by the urging means, and when the tension applied to the belt is smaller than the predetermined value, the rotating body is not rotated in the belt withdrawing direction, or the angle of rotation thereof is smaller than the predetermined value. Then, when the tension applied to the belt reaches or exceeds the predetermined value, the rotating body rotates by the predetermined angle or more in the belt withdrawing direction, and this event is displayed on the display means. Accordingly, the fact that the tension equal to or larger than the predetermined value is applied to the belt is detected.

In this mode, the tension detecting apparatus can be mounted to the belt simply by passing the belt through the slit, and hence the mounting work of the tension detecting apparatus to the belt can be facilitated. In this mode, since the belt is passed through the rotating body via the slit, the adjustment of the mounting position of the tension detecting apparatus in the direction of extension of the belt can be achieved easily and quickly by sliding the rotating body along the belt.

In the mode of another preferred embodiment, since the rotating body has the belt guide surface extending in the direction away from the axis of rotation, and is only in abutment with the belt via the belt guide surface, the configuration is simple. The tension detecting apparatus can be mounted to the belt simply by placing the belt guide surface of the rotating body in contact with the belt, and the mounting work of the tension detecting apparatus to the belt is further facilitated. The adjustment of the mounting position of the tension detecting apparatus with respect to the belt is achieved only by shifting the belt guide surface along the surface of the belt, and hence it can be achieved further easily and quickly.

In this mode, since the force of the belt that presses the belt guide surface is weak when the tension of the belt is smaller than the predetermined value, the belt guide surface is inclined toward the belt (the opposite direction from the normal direction) so that the belt is bent. When the tension of the belt is increased, the belt tends to be in the uptight (so called, under tension) state and presses the belt guide surface, whereby the rotating body rotates in the normal direction. When the tension of the belt reaches or exceeds the predetermined value, the angle of rotation of the rotating body in the normal direction reaches or exceeds the predetermined angle, and this event is displayed on the display section.

As described in still another preferred embodiment, in the belt tension detecting apparatus including the belt insertion holes formed respectively on the pair of opposing surfaces of the case, the pair of opposing surfaces opposing to each other in the direction intersecting with the axis of rotation of the rotating body, in which one end side of the belt is led through one of the belt insertion holes out from the case and the other end side is led through the other belt insertion hole out from the case, when the tension equal to or larger than the predetermined value is applied to the belt, the belt is brought into the uptight state between the belt insertion hole on the one of the opposing surface and the belt insertion hole on the other opposing surface, and the rotating body is locked by the belt in a state of being rotated by the predetermined angle or more in the normal direction.

According to the belt tension detecting apparatus of a preferred embodiment, when the rotating body is locked in the state of being rotated by the predetermined angle or more in the normal direction, the different color portion opposes the window, and hence the different color portion can be viewed sufficiently from the outside of the case. Therefore, the fact that the tension equal to or larger than the predetermined value is applied to the belt can be viewed easily.

According to the child seat in the present invention, with the provision of the tension detecting apparatus in the present invention as the belt tension detecting apparatus for joining the child seat and the member on the side of the vehicle, the mounting work of the tension detecting apparatus to the belt can be facilitated. The adjustment of the mounting position of the tension detecting apparatus in the direction of extension of the belt is also easy.

### [Brief Description of the Drawings]

Fig. 1 is a perspective view of a tension indicator as a belt tension detecting apparatus according to an embodiment.
Fig. 2 is an exploded perspective view of the tension indicator shown in Fig. 1.
Fig. 3 is a perspective view of a roller of the tension indicator shown in Fig. 1.
Fig. 4 is a perspective view of a case body for accommodating the roller shown in Fig. 1.
Fig. 5 is a perspective view of a cap to be mounted to both end sides of the case shown in Fig. 1.
Fig. 6 is a perspective view showing an engaged state of the roller of the tension indicator with respect to the cap and a spring shown in Fig.1.
Fig. 7 is a cross-sectional view showing a state in which a tension applied to the belt is smaller than a predetermined value and reaches or exceeds the predetermined value taken along the line VII-VII in Fig. 1.
Fig. 8 is a perspective view of a child seat provided with the tension indicator 1 in Fig. 1.
Fig. 9 illustrates a perspective view and a cross-sectional perspective view of the tension indicator as the belt tension detecting apparatus according to another embodiment.
Fig. 10 is an exploded perspective view of the tension indicator shown in Fig. 9.
Fig. 11 is a perspective view of a portion near a bearing portion of the rotating body of the tension indicator shown in Fig. 9.
Fig. 12 is a cross-sectional view of the tension indicator shown in Fig.9 showing a state in which the belt tension applied to the belt is smaller than the predetermined value, and a state in which the belt tension reaches or exceeds the predetermine value.
Fig. 13 is a perspective cross-sectional view showing a state in which the belt tension applied to the belt reaches or exceeds the predetermined value.

### [Best Mode for Carrying Out the Invention]

Referring now to the drawings, embodiments of the present invention will be described.

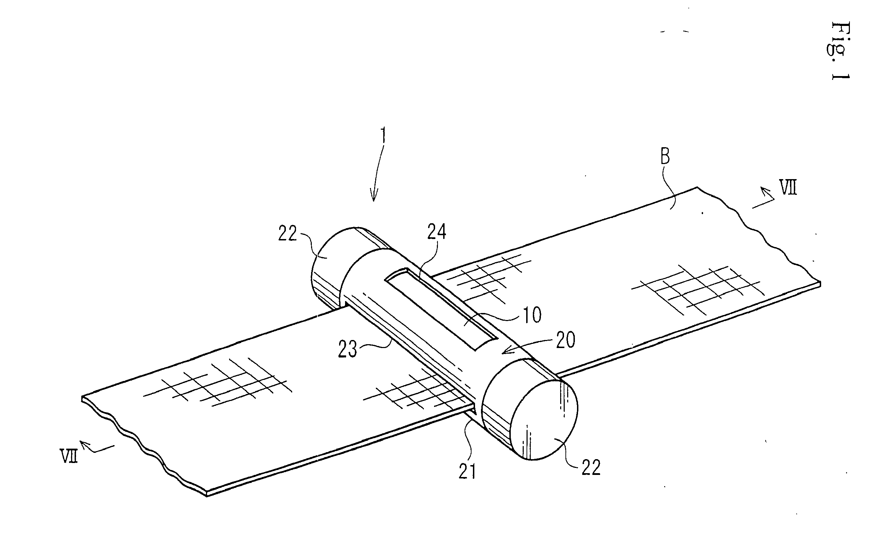

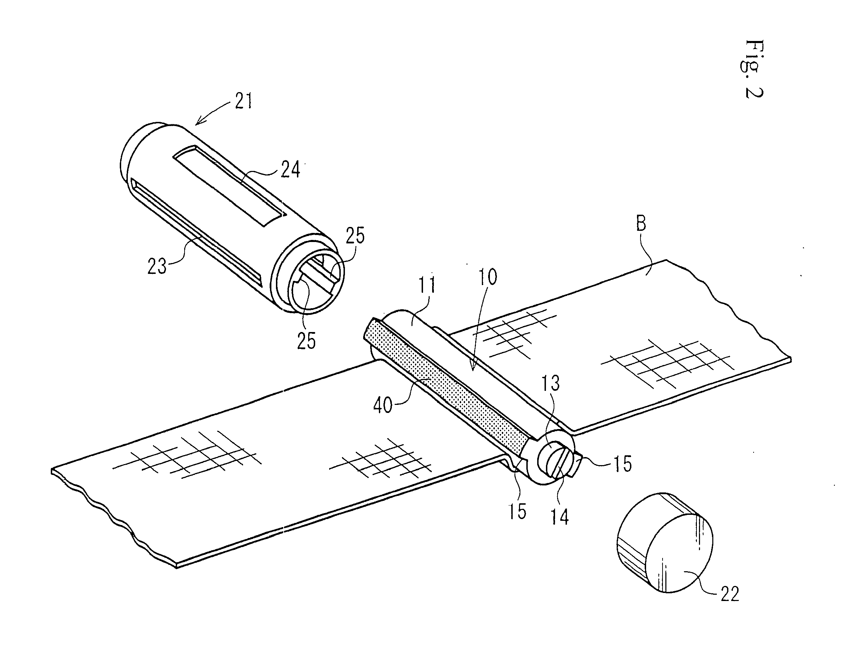

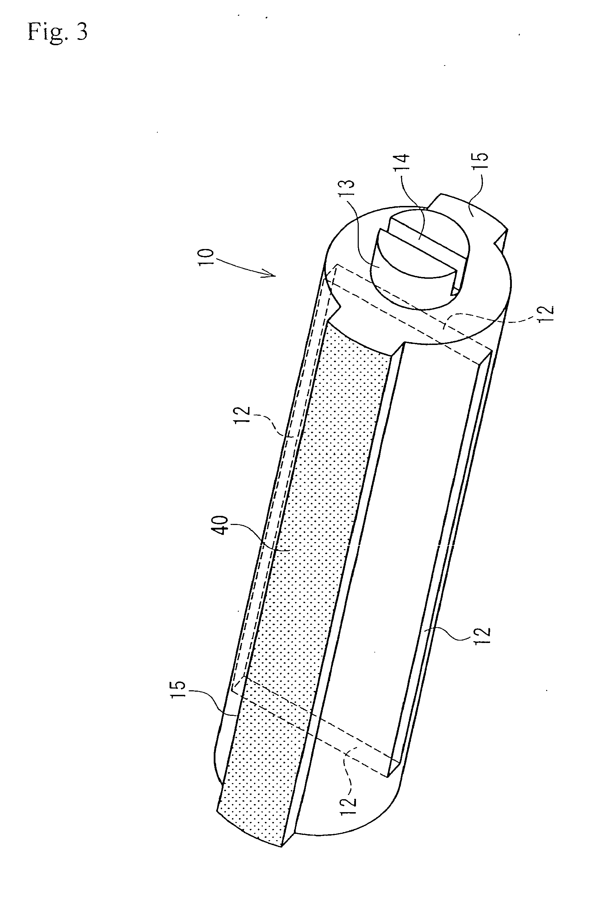

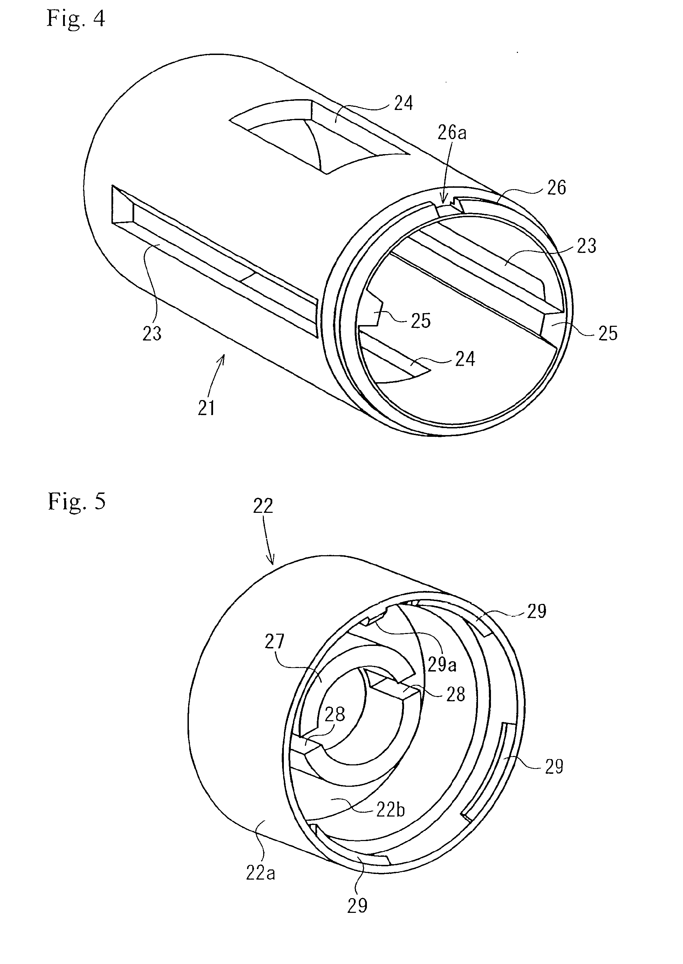

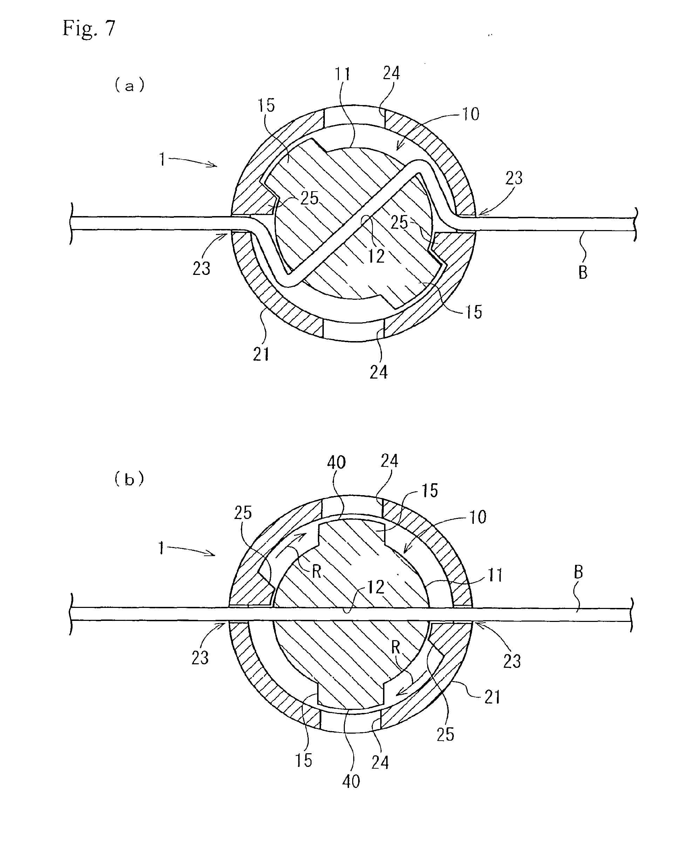

Fig. 1 is a perspective view of a tension indicator as a belt tension detecting apparatus according to an embodiment; Fig. 2 is an exploded perspective view of the tension indicator; Fig. 3 is a perspective view of a roller (rotating body) of the tension indicator; Fig. 4 is a perspective view of a case body for accommodating the roller; Fig. 5 is a perspective view of a cap to be mounted to both end sides of the case; Figs. 6(a) and (b) are perspective views showing engagement states of a spring with respect to the roller and the cap, respectively; Figs. 7(a) and (b) are cross-sectional views showing states in which a tension applied to the belt is smaller than a predetermined value and reaches or exceeds the predetermined value taken along the line VII-VII in Fig. 1.

A tension indicator 1 as the belt tension detecting apparatus includes a roller 10 as the rotating body arranged on a belt B at a midsection thereof in the extending direction, a case 20 for accommodating the roller 10 so as to be capable of rotating in the belt retracting direction and the belt withdrawing direction; a spring (torsion spring) 30 as urging means for urging the roller 10 in the belt retracting direction, and a display section for indicating that the roller 10 is rotated in the belt withdrawing direction (a different color portion 40 and a window 24 described later).

As shown in Fig. 3, the roller 10 includes a substantially cylindrical roller body 11, a slit 12 which is penetrated through the roller body 11 in a direction orthogonal to an axial centerline thereof (in the direction of diameter of the roller body 11) and through which the belt B is passed, a spindle 13 projected from both end sides of the roller body 11 in the direction of the axial centerline along the direction of extension of the axial centerline, a spring engagement groove 14 formed on the spindle 13 for allowing one end side of the spring 30 to engage therewith, and a stopper 15 projected from an outer peripheral surface of the roller body 11 for preventing the roller body 11 from rotating by a predetermined extent or more about the spindle 13.

The slit 12 is provided so that the direction of the width of the belt B to be inserted therethrough is oriented in the direction of the axial centerline of the roller body 11.

The stopper 15 in this embodiment is a convexity extending in the direction of the axial centerline of the roller body 11. As shown in Fig. 7, two stoppers 15 are provided so as to be respectively shifted from both openings of the slit 12 by about 90° around the axial centerline of the roller body 11. In this embodiment, outer peripheral surfaces of the respective stoppers 15 correspond to the different color portions 40.

In this embodiment, the different color portions 40 have a color different from that of the remaining portion of the outer peripheral surface of the roller body 11. A method of coloring these different color portions 40 are arbitrary, and may be achieved, for example, by applying paint or attaching colored stickers or the like. The method of coloring the outer peripheral surface of the roller body 11 is also arbitrary. Characters, signs and such may be drawn on the colored portions. Color coding of the different color portions 40 and the outer peripheral surface of the roller body 11 may be achieved by coloring both of them in different colors, or one of them may be kept in an original color of the material of the roller body 11.

The case 20 includes a substantially cylindrical case body 21 fitted exteriorly onto the roller body 11, and caps 22, 22 to be mounted to both end sides of the case body 21.

As shown in Fig. 7, the case body 21 is provided with a pair of belt insertion holes 23, 23 which communicate the inside and the outside of the case body 21 at a positional relation of about 180° in phase difference about the axial centerline thereof. The respective belt insertion holes 23 extend in the direction of the axial centerline of the case body 21. The case body 21 is formed with the windows (opening) 24 for viewing the color different portions 40. As shown in the drawing, in this embodiment, two windows 24 are provided so as to be respectively shifted from the belt insertion holes 23 by about 90° about the axial centerline of the case body 21.

In this embodiment, the different color portions 40 and the windows 24 constitute the display sections.

Convexities 25 with which the stoppers 15 of the roller body 10 come into abutment are provided so as to project from an inner peripheral surface of the case body 21. In this embodiment, as shown in Fig. 7, the respective convexities 25 extend along side edges of peripheral edge of the respective belt insertion holes 23 on the side of the belt withdrawing direction (the direction indicated by an arrow R in Fig. 7(b)) of the roller 11.

Outer peripheral surfaces at the both ends of the case body 21 are formed with grooves 26 (Fig. 4) therearound for engaging the caps 22. Reference numeral 26a in Fig. 4 designates a notch formed from both ends of the case body 21 toward the groove 26 for positioning the cap 22 (for preventing the cap 22 from rotating together with the spring 30).

The roller 10 is arranged coaxially in this case body 21 as shown in Fig. 7. As shown in the drawings, the respective stoppers 15 of the roller 10 are arranged on the windows 24 sides (on the opposite sides from the belt insertion holes 23 located adjacently to the respective convexities 25) with respect to the respective convexities 25 on the case body 21. One end side of the belt B passed through the slit 12 of the roller 10 with respect to the roller 10 is passed through one of the belt insertion holes 23 and drawn out of the case body 21, while the other end side thereof with respect to the roller 10 is passed through the other belt insertion hole 23 and drawn out of the case body 21 on the opposite side.

As shown in Fig. 5, each cap 22 includes a cylindrical portion 22a which is to be fitted on the outer peripheral surface of the end portion of the case body 21, a covering wall portion 22b for covering a rear end side of the cylindrical portion 22a. A substantially cylindrical boss portion 27 for rotatably holding the spindle 13 of the roller 10 arranged in the case body 21 is provided at a center of the covering wall portion 22b. The boss portion 27 is formed with a spring engagement groove 28 with which the other end side of the spring 30 engages. Claws 29 that engage the groove 26 and a projection 29a that engages the notch 26a are formed on an inner peripheral surface on a distal side of the cylindrical portion 22a so as to project therefrom.

When mounting the cap 22 to the case body 21, the cap 22 is covered on the end portion of the case body 21 while fitting the projection 29a into the notch 26a and engaging the spindle 13 of the roller 10 in the case body 21 with the boss portion 27 (when mounting the cap 22, the spring 30 is arranged inside the cap 22. The arrangement of the spring 30 will be descried later). Then, the cap 22 is pushed toward the center of the case body 21 in the direction of the axial centerline, and engages the claws 29 with the groove 26.

In this manner, by mounting the caps 22 to the both ends of the case body 21 respectively, the roller 10 is held in the case body 21 so as to be capable of rotating in the belt withdrawing direction (the direction indicated by the arrow R in Fig. 7(b)) and the belt retracting direction (the direction opposite from the direction indicated by the arrow R).

The spring 30 is arranged so as to surround the boss portion 27 and the spindle 13 fitted interiorly in the boss portion 27 as shown in Figs. 6(a) and (b), and both ends thereof are engaged with the respective spring engagement grooves 28, 14 of the boss portion 27 and the spindle 13 in a state in which a force is accumulated to urge the roller 10 in the belt retracting direction. In Fig. 6 (a), the boss portion 27 fitted exteriorly to the spindle 13 is not shown, and in Fig. 6 (b), the spindle 13 fitted interiorly in the boss portion 27 is not shown.

As described above, the cap 22 is prevented from rotating together with the spring 30 by the engagement of the projection 29a thereof with the groove 26a of the case body 21. The spring 30 receives a reaction force from the cap 22 to urge the roller 10 in the belt retracting direction.

The spring 30 has a spring constant that allows rotations of the roller 10 by a predetermined angle or more in the belt withdrawing direction (from a state in which the respective stoppers 15 come into abutment with the convexities 25 as shown in Fig. 7 (a) to a state in which the respective different color portions 40 face the respective windows 24 as shown in Fig. 7 (b)) when a tension of a predetermined value or larger is applied to the belt B.

An operation of the tension indicator 1 in this configuration will be described below.

When the tension applied to the belt B is smaller than the predetermined value, the roller 10 is not rotated in the belt withdrawing direction or the angle of rotation thereof is smaller than the predetermined value as shown in Fig. 7(a), and hence the color different from the different color portions 40 (the color of the outer peripheral surface of the roller body 11) is exposed from the respective windows 24.

When the tension applied to the belt B reaches or exceeds the predetermined value, the roller 10 rotates by the predetermined angle or more in the belt withdrawing direction and the display in the respective windows 24 changes to the color of the different color portions 40 as shown in Fig. 7(b). Accordingly, the fact that the tension of the predetermined value or larger is applied to the belt B is recognized. As shown in the drawings, the belt B assumes an uptight (so called, under tension) state between one of the belt insertion holes 23 and the other belt insertion hole 23 of the case 20, and the roller 10 is brought into a state of being locked by the belt B in the withdrawn state.

In the tension indicator 1, since the belt B is passed through the slit 12 which penetrates through the roller 10, and one end side and the other end side of the belt B with the intermediary of the roller 10 are continued integrally, it is not necessary to join the end of the belt B to the roller 10 or the case 20, and hence the configuration can be relatively simplified. The tension indicator 1 can be mounted to the belt B simply by passing the belt B through the slit 12 and the respective belt insertion holes 23 of the case 20, and the mounting work for mounting the tension indicator 1 to the belt B is also easily.

The tension indicator 1 can be moved in the direction of extension of the belt B simply by sliding the tension indicator 1 (the roller 10 and the case 20) along the belt B. Accordingly, adjustment of the mounting position of the tension indicator 1 in the direction of extension of the belt B can be achieved easily and quickly. In this case, the tension indicator 1 can be slid along the belt B relatively with easiness by applying the tension to the belt B and rotating the roller 10 until the both openings of the slit 12 oppose the respective belt insertion holes 23 of the case 20.

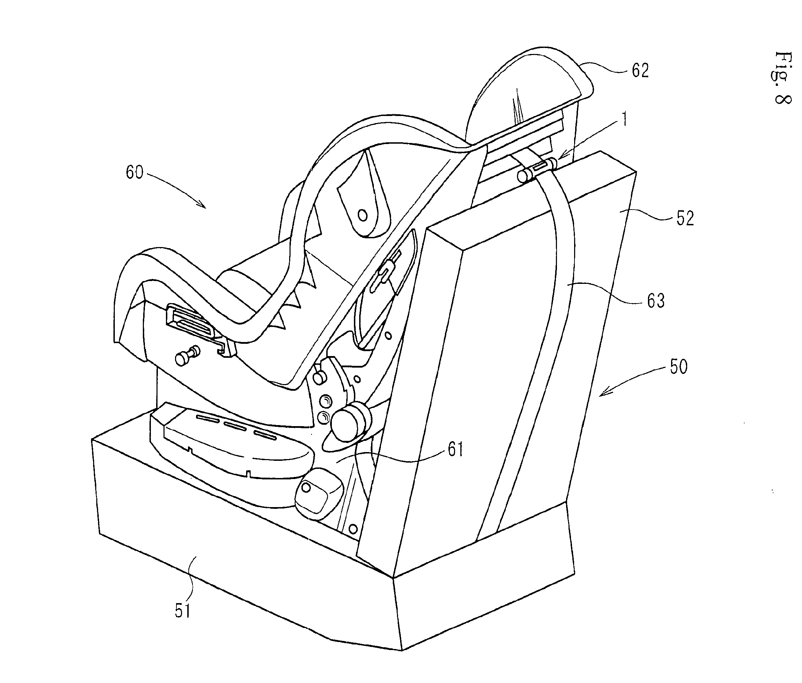

Fig. 8 is a perspective view of a child seat provided with the tension indicator 1.

A child seat 60 includes a base 61 to be placed on a seat cushion 51 of a vehicle seat 50, and a child seat body 62 joined and placed on the base 61.

The child seat 60 is fixed to the seat 50 by connecting an arm (not shown) extending from a rear portion of the base 61 to an arm joint member (not shown) provided on the seat 50 or a vehicle, while a fixing belt 63 extending from an upper end of the child seat body 62 is pulled around a back side of a seatback 52 of the seat 50, and is joined to a belt joint member (not shown) provided on the seat 50 or the vehicle, thereby being fixed to the seat 50.

The fixing belt 63 is provided with belt tightening means (not shown) and the child seat 60 is fixed to the seat 50 by tightening the belt 63 with the belt tightening means until a tension of a predetermined value or larger is applied to the belt 63.

The tension indicator 1 described above shown in Fig. 1 to Fig. 7 is mounted to the fixing belt 63 at a midsection thereof in the extending direction as the means for detecting a tension equal to or larger than the predetermined value. The tightening of the belt 63 is executed until the color of the windows 24 of the tension indicator 1 is changed to the color of the different color portions 40.

In the case of the child seat 60 as well, since the tension indicator 1 can be mounted to the fixing belt 63 simply by passing the belt 63 through the slit 12 of the roller 10 and the belt insertion holes 23 of the case 20, a mounting work of the tension indicator 1 to the belt 63 is easy. Also, since the mounting position of the tension indicator 1 in the extending direction of the belt 63 is adjusted simply by sliding the tension indicator 1 (the roller 10 and the case 20) along the belt 63, an adjustment of the mounting position of the tension indicator 1 is also easy.

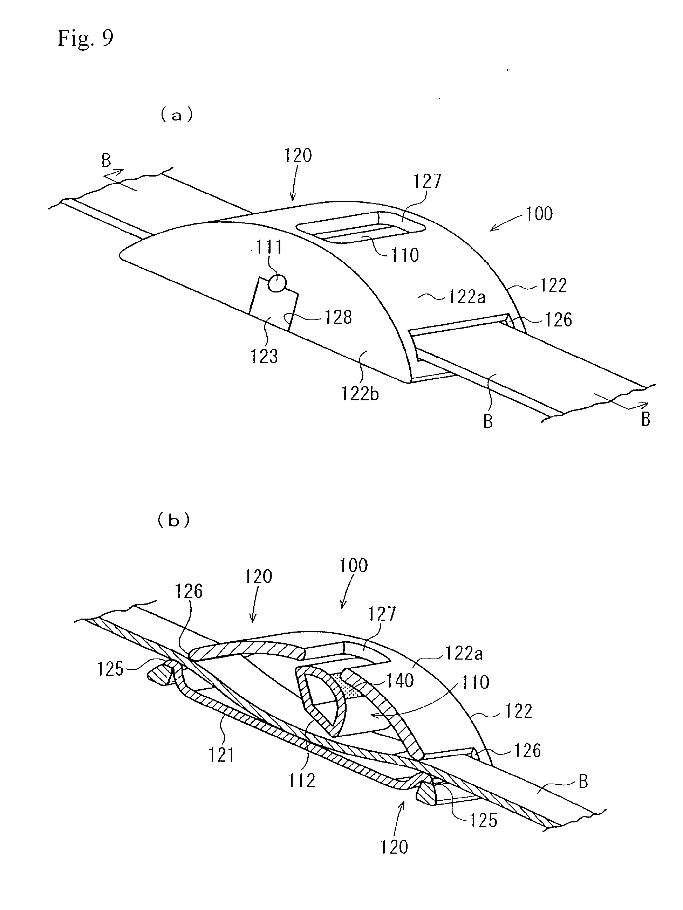

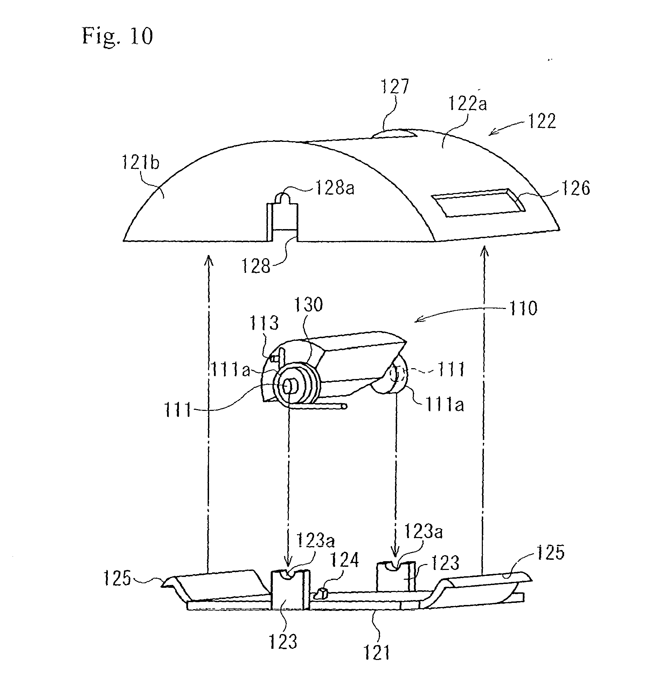

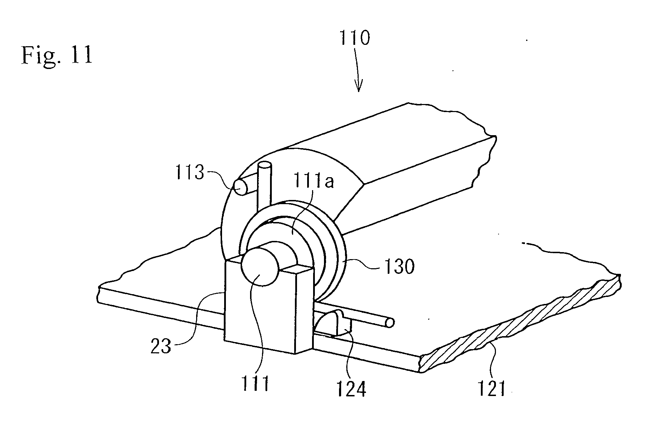

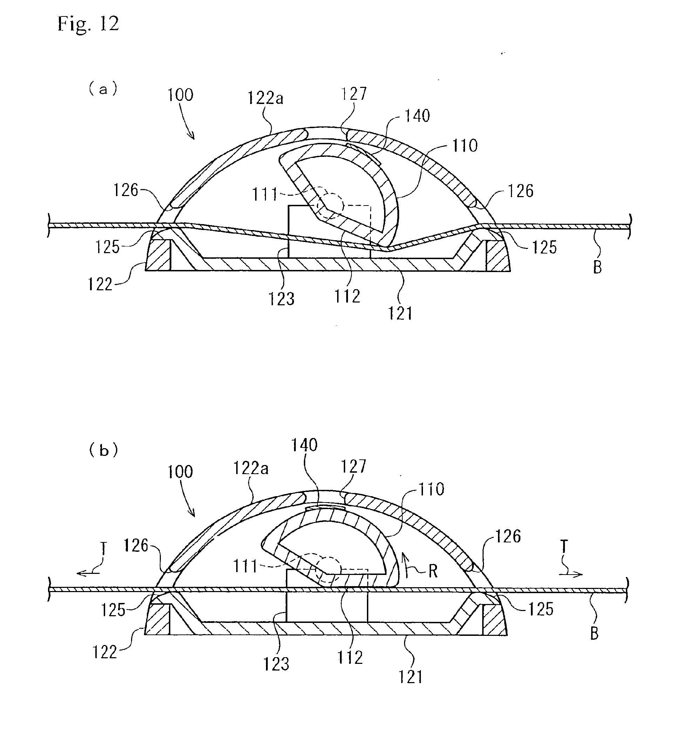

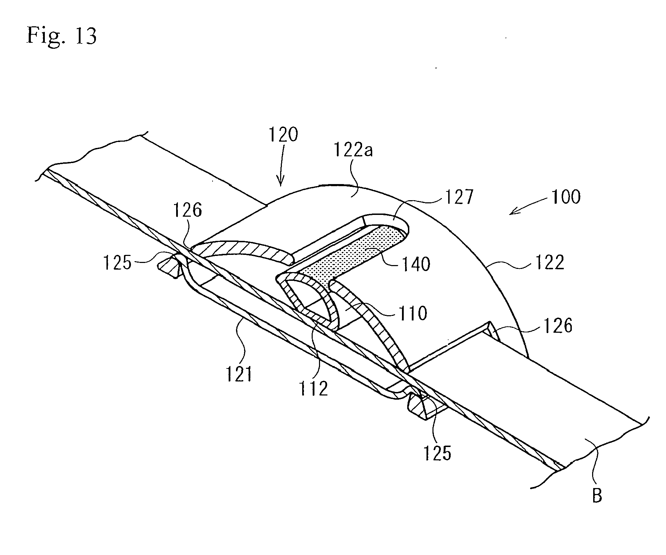

Fig. 9(a) is a perspective view of the tension indicator as the belt tension detecting apparatus according to another embodiment, and Fig. 9(b) is a cross-sectional view taken along the line B-B in Fig. 9(a); Fig. 10 is an exploded perspective view of the tension indicator; Fig. 11 is an enlarged perspective view of a portion near a bearing portion of the rotating body of the tension indicator; Fig. 11 is an enlarged perspective view of a portion near the bearing portion of the rotating body of the tension indicator; Figs. 12(a) and (b) are cross-sectional views of the tension indicator showing a state in which the belt tension is smaller than the predetermined value, and a state in which the tension of the belt reaches or exceeds the predetermine value respectively; and Fig. 13 is a perspective cross-sectional view of the tension indicator showing a state in which the belt tension reaches or exceeds the predetermined value.

A tension indicator 100 as the belt tension detecting apparatus in this embodiment includes a rotating body 110 which is arranged on the belt B at a midsection in the direction of extension thereof and is rotatable by being pushed by the belt B in association of increase in tension of the belt B (hereinafter, the direction of rotation of the rotating body 110 caused by being pressed by the belt B is referred to as a normal direction), a case 120 rotatably accommodating the rotating body 110, a spring (torsion spring) 130 as urging means that urges the rotating body 110 to rotate in the direction opposite from the normal direction, and a display section for displaying the fact that the rotating body 110 is rotated in the normal direction by being pressed by the belt B (a different color portion 140 and a window 127 described later).

The rotating body 110 is arranged so that an axis of rotation 111 (spindle) extends in the direction of the width of the belt B. In this embodiment, as shown in Figs. 12(a) and (b), the rotating body 110 is formed into a substantially fan shape in cross section taken along a direction orthogonal to the direction of extension of the axis of rotation 111, and the axis of rotation 111 is arranged near a position corresponding to a linchpin of the fan. One of flat surfaces which extends in the direction away from the linchpin of the fan (in other words, the axis of rotation 111) serves as a belt guide surface 112, and the belt guide surface 112 is in contact with the belt B.

The other flat surface which extends in the different direction from the belt guide surface 112 with the intermediary of the axis of rotation 111 also faces the belt B, and an angle formed by the belt guide surface 112 and the other flat surface is a predetermined acute angle. As shown in Fig. 12(b), even when the rotating body 110 rotates in the normal direction by the belt guide surface 112 being pressed by the belt B and the other flat surface approaches to the belt B, the other flat surface does not come into contact with the belt B.

A peripheral surface connecting an edge of the belt guide surface 112 on the side far from the axis of rotation 111 (hereinafter, it may be referred to as a distal side) and an edge of the other flat surface on the side far from the axis of rotation 111 is curved so as to define an arc formed with the axis of rotation 111 serving as a substantially center of the arc.

A midsection of a peripheral surface of the rotating body 110 (a position shifted from a distal side of the other flat surface toward the distal side of the belt guide surface 112 by a predetermined angle about the axis of rotation 111) corresponds to the different color portion 140. The different color portion 140 is different in color from other portion of the peripheral surface, and extends along the peripheral surface in a band shape of a predetermined width in parallel with the direction of extension of the axis of rotation 111.

As in the case of the different color portions 40 in the embodiment described above, the method of coloring of this different color portion 140 is arbitrary, and may be colored, for example, by applying paint or attaching the colored sticker or the like. The method of coloring the peripheral surface of the rotating body 110 is also arbitrary. Characters, signs and such may be drawn on the colored portion. Color coding of the different color portion 140 and the peripheral surface of the rotating body 110 may be achieved by coloring both of them in different colors, or one of them may be kept in an original color of the material of the rotating body 110.

Both end sides of the axis of rotation 111 project from end surfaces on both sides of the rotating body 110 in the direction of extension of the axis of rotation 111, respectively. Root sides of the axis of rotation 111 projected respectively from the both end surfaces of the rotating body 110 is formed with large diameter portions 111a which are larger in diameter than the respective distal ends. In this embodiment, the spring 130 is exteriorly fitted so as to surround one of the large diameter portions 111a. As shown in Fig. 11, a spring engagement projection 113 with which one end of the spring 130 engages is formed so as to project from the end surface of the rotating body 110 on the side where the spring 130 is arranged.

The case 120 includes a base plate 121 arranged along one of the surfaces of the belt B and a housing 122 mounted so as to cover the base plate 121 from the opposite side from the base plate 121 with the intermediary of the belt B.

The base plate 121 is a substantially rectangular plate shaped member extending in the longitudinal direction of the belt B. The base plate 121 is formed with bearing portions 123 from edges on both side in the direction of the width of the belt B for holding both end sides of the axis of rotation 111 of the rotating body 110 (distal side with respect to the large diameter portion 111a) so as to project therefrom. The respective bearing portions 123 are formed with notched bearing grooves 123a (Fig. 10) at upper ends thereof, and the both ends of the axis of rotation 111 are respectively engaged with the bearing grooves 123a. In this embodiment, the bearing grooves 123a have a depth which can accommodate a half the circumference of the axis of rotation 111.

As shown in Fig. 11, a spring engagement projection 124 with which the other end of the spring 130 engages is provided on the base plate 121 at a position near the root of the bearing portion 123 on the side where the spring 130 is arranged so as to project therefrom. The spring 130 is wound around one of the large diameter portions 111a of the rotating body 110, and the both ends thereof are engaged respectively with the projection 113 of the rotating body 110 and the projection 124 of the base plate 121 in a state in which a force is accumulated to urge the rotating body 110 in the direction opposite from the normal direction.

Claw shaped engaging members 125 that engages with respective belt insertion holes 126 of the housing 122 described later are provided on the base plate 121 at both ends in the direction of extension thereof.

The housing 122 includes an arch-shaped portion 122a extending from one end of the base plate 121 to the other end thereof so as to straddle the same and a side plate portion 122b continuing respectively from both edges of the arch-shaped portion 122a on both sides in the direction intersecting with the direction of extension thereof.

The belt insertion holes 126 are provided on the arch-shaped portion 122a at both end sides in the direction of extension thereof, respectively. The respective belt insertion holes 126 are formed into a slit shape extending in parallel to the axis of rotation 111 of the rotating body 110 supported on the base plate 121. A window 127 for viewing the different color portion 140 is formed on the arch-shaped portion 122a at a position near the midsection in the direction of extension thereof (that is, near the apex of the arch-shaped portion 122a). The window 127 is formed into a slit shape extending in parallel with the direction of extension of the axis of rotation 111 of the rotating body 110 supported on the base plate 121.

In this embodiment as well, the different color portion 140 and the window 127 constitute the display section.

The respective side plate portions 122b are formed with recesses 128 with which the bearing portions 123 projecting from both edges of the base plate 121 engage respectively when the hosing 122 is mounted to the base plate 121. The recesses 128 are formed so as to cut out lower edges of the respective side plate portions 122b. The inner most portions of the respective recesses 128 (That corresponds to edge on the upper side in Fig. 10. Hereinafter, the vertical direction matches the vertical direction in Fig. 10) are formed with bearing grooves 128a (Fig. 10) in a positional relation in which they oppose the bearing grooves 123a when the bearing portions 123 engages the recesses 128. The bearing grooves 128a also have a depth that accommodates substantially half the circumference of the axis of rotation 111.

In other words, in this embodiment, the axis of rotation 111 is held by the case 120 so as to be clamped between the bearing grooves 128a, 123a from above and below by mounting the housing 122 to the base plate 121. However, the bearing structure of the axis of rotation 111 is not limited thereto.

In this embodiment, the base plate 121 and the housing 122 are joined by resiliently engaging the engaging members 125 on both ends of the base plate 121 with the belt insertion holes 126 at both ends of the housing 122 respectively. The respective engaging members 125 extend along lower edges of the respective belt insertion holes 126 when being engaged with the respective belt insertion holes 126. The belt B is passed between upper edges of the belt insertion hole 126 and the engaging members 125 in the respective belt insertion holes 126.

The tension indicator 100 can be mounted to the belt B by passing the belt B through the both belt insertion holes 126 of the housing 122 so as to pass through the inside of the housing 122.

Subsequently, a portion of the belt B located inside the housing 122 is led along the base plate 121. Then, the rotating body 110 on which the spring 130 is mounted in advance is arranged above the belt B so that the belt guide surface 112 opposes the belt B, and the both ends of the axis of rotation 111 are engaged with the bearing grooves 123a of the bearing portions 123, respectively. In this case, both ends of the spring 130 is engaged with the respective spring engagement projections 113, 124 in a power-accumulated state.

Subsequently, the engaging members at both ends of the base plate 121 are engaged with the respective belt insertion holes 126 of the housing 122 while allowing the respective bearing portions 123 to be inserted into the corresponding recesses 128 of the housing 122 respectively to join the base plate 121 and the housing 122.

Accordingly, mounting of the tension indicator 100 to the belt B is completed.

Subsequently, an operation of the tension indicator 100 will be described.

When the tension applied to the belt B is smaller than the predetermined value, the rotating body 110 rotates in the opposite direction by the urging force of the spring 130 as shown in Fig. 12(a), and the belt guide surface 112 is in a state of being inclined so that the distal side is closer to the base plate 121. In this case, the distal side of the belt guide surface 112 presses the belt B, and bends the belt B as shown in the drawing. At this time, as shown in the drawing, the different color portion 140 is not exposed through the window 127, and a color different from the different color portion 140 is exposed through the window 127 (a color of a portion of the peripheral surface of the rotating body 110 other than the different color portion 140).

When the tension applied to the belt B reaches or exceeds the predetermined value, as shown in Fig. 12(b), the belt guide surface 112 is pressed by the belt B, whereby the rotating body 110 rotates in the normal direction (the direction indicated by the arrow R in the drawing). When the angle of rotation reaches or exceeds the predetermined angle, the different color portion 140 is exposed through the window 127 as shown in the drawing, and the display of the window 127 changes to the color of the different color portion 140. As shown in the drawing, the belt B is brought into an uptight (so called, under tension) state between one of the belt insertion holes 126 and the other belt insertion holes 126 of the case 120, whereby the rotating body 110 is locked to a state of being rotated by the belt B by a predetermined angle or more. Reference sign T of Fig. 12(b) indicates a tension to be applied to the belt B.

In this tension indicator 100, since only the belt guide surface 112 of the rotating body 110 is in contact with the belt B, and the belt B is continued integrally from the one end side to the other end side, it is not necessary to join the end of the belt B to the rotating body 110 or the case 120, and hence the configuration can be relatively simplified. The tension indicator 100 can be mounted to the belt B simply by passing the belt B through the respective belt insertion holes 126 of the case 120 and placing the rotating body 110 in contact with the belt B, and the mounting work of the tension indicator 100 to the belt B is easy.

In this tension indicator 100 as well, the tension indicator 100 can be moved in the direction of extension of the belt B simply by sliding the tension indicator 100 (the rotating body 110 and the case 120) along the belt B, and shifting the position of abutment of the belt guide surface 112 of the rotating body 110 with respect to the belt B. Accordingly, adjustment of the mounting position of the tension indicator 100 in the direction of extension of the belt B can be achieved easily and quickly.

In this embodiment, the rotating body 110 is formed into the fan shape in cross section, however the shape of the rotating body is not limited thereto. For example, the rotating body in the present invention may have a plate shape having only the belt guide surface which tilts about the axis of rotation 111.

The embodiments described above are illustrative only, and the present invention is not limited to the embodiments shown above.

## Claims

1. A belt tension detecting apparatus (1; 100) for detecting the fact that a tension equal to or larger than a predetermined value is applied to a belt (B), comprising:
a rotating body (11; 110) being arranged on the belt (B) at a midsection in the direction of extension of the belt (B) and being capable of rotating in a normal direction by being pressed by the belt (B) in association with increase in the tension of the belt (B);
urging means (30; 130) that urges the rotating body (11; 110) in the normal direction and in an opposite direction; and
display means (40; 140, 24; 127) that displays the fact that the rotating body (11; 110) rotates in the normal direction by a predetermined angle or more.

2. The belt tension detecting apparatus (1; 100) according to Claim 1, **characterized in that** a slit (12) is formed through the rotating body (11) for allowing passage of the belt (B),
the slit (12) is provided so that a width direction of the belt (B) passed through the slit is oriented in the direction of an axial centerline of the rotating body or in parallel thereto, and
the urging means (30) urges the rotating body (11) in the direction of retraction of the belt passed through the slit.

3. The belt tension detecting apparatus (1; 100) according to Claim 1, **characterized in that** the rotating body (11; 110) includes a belt guide surface (112) extending in the direction away from an axis of rotation thereof and at least a part of the belt guide surface (112) apart from the axis of rotation comes into abutment with the belt (B).

4. The belt tension detecting apparatus (1; 100) according to any one of Claims 1 to 3, comprising:
a case (20; 120) that rotatably accommodates the rotating body (11; 110), belt insertion holes (23; 126) formed respectively on a pair of opposing surfaces of the case (20; 120), the pair of opposing surfaces opposing to each other in the direction intersecting with the axis of rotation of the rotating body (11; 110),
**characterized in that** one end side of the belt (B) is led through one of the belt insertion holes (23; 126) out from the case (20; 120) and the other end side is led through the other belt insertion hole (23; 126) out from the case (20; 120).

5. The belt tension detecting apparatus (1; 100) according to Claim 4, **characterized in that** the display means (40; 140, 24; 127) includes a window (24; 127) provided on the case (20; 120) and a different color portion (40; 140) provided on a part of a peripheral surface of the rotating body (11; 110), and the different color portion (40; 140) faces the window (24; 127) when the rotating body (11; 110) rotates by a predetermined angle or more.

6. The belt tension detecting apparatus (1) according to Claim 5, **characterized in that** two windows (24) are provided so as to be respectively shifted with respect to the belt insertion holes (23) by about 90° about the axial centerline of the case (20).

7. A child seat (60) installed on a seat (50) of a vehicle and joined and fixed to a member on the vehicle side by a belt (63) comprising:
a belt tension detecting apparatus (1) for detecting the fact that a tension equal to or larger than a predetermined value is applied to the belt (63),
**characterized in that** the belt tension detecting apparatus (1) is the belt tension detecting apparatus (1; 100) according to any one of Claims 1 to 6.
